# DEMANDE DE BREVET EUROPEEN

(11) **EP 0 696 150 A2**
(43) Date de publication de la demande: **07.02.1996**
(21) Numéro de dépôt: 95830288.7
(22) Date de dépôt: 05.07.1995
(51) Int. Cl.: H04Q 7/32

(54) **Signalisation d'appel pour radiotéléphone non accessible**

(30) Priorité: 25.07.1994 IT IS940002
(71) Demandeur: Scardapane, Claudio, I-66050 San Salvo (CH) (IT)
(72) Inventeur: Scardapane, Claudio, I-66050 San Salvo (CH) (IT)

(57) **Abrégé**

Le système de fonctionnement de l'appel à l'arrivée d'un radiotéléphone portatif "cellulaire" est ainsi articulé:
1)de la station de base part un code d'identification qui est reçu par le téléphone portatif intéressé;
2)le radiotéléphone portatif, en réponse, envoie ses données de reconnaissance;
3)les données convenablement décodées permettent à la station de base d'envoyer une note d'appel qui, successivement, fera sonner le radiotéléphone portatif.

Au cas où le radiotéléphone recevant le code d'identification n'arrive pas à rejoindre (transmettant les données) la station de base à cause d'obstacles naturels ou artificiels, la sonnerie du radiotéléphone ne se met pas en fonction.

Mon système (particulièrement efficace s'il est appliqué aux radiotéléphones palmaires) intervient quand le signal de réponse du radiotéléphone portatif (phase 2) est insuffisant, signalant ainsi à l'usager que le radiotéléphone ne reçoit pas l'appel dans la position où il se trouve.

Souvent il suffit de le déplacer un peu pour recevoir l'appel.

## Description

Ce système, particulièrement efficace s'il est adopté par des téléphones portatifs (palmaires), prend naissance de differentes preuves expériencielles et pratiques qui ont été effectuées personellement et concerne toute la téléphonie portative déjà diffusée à niveau mondial, avec des systèmes partiellement differents entr'eux mais avec les mêmes principes de fonctionnement de base, soit de conception analogique soit de la plus moderne conception digitale.

Le problème qu'on examinera peut intéresser n'importe quel usager chaque fois que son téléphone portatif s'apprête à recevoir un appel dans une zone à réseau radioéléctrique non optimal. Pour une efficace compréhension du tout, je vais décrire de façon générale la manière dont l'appel arrive au téléphone portatif.

La station fixe à laquelle est confiée la tâche d'assurer le réseau radio-éléctrique de la zone où se trouve le téléphone portatif que l'on veut appeler, transforme le numéro doigté par celui qui appelle en un code d'identification qu'il répandra dans son aire. Le téléphone portatif reconnaîtra son code et enverra à la station de base une réponse. Cette réponse reçue par la station de base, permet à celle-ci de transmettre l'appel à l'appareil mobile, qui successivement activera sa sonnerie.

Il suffit qu'une seule de ces transmissions de données ne rejoigne la partie interessée pour que la sonnerie du téléphone portatif ne s'active pas. Les possibilités que les données transmises par la station de base rejoignent le téléphone portatif sont toujours très bonnes, vice versa il est de moins en moins possible que le signal de réponse parvienne à destination au fur et à mesure que l'on se déplace vers des zones où le signal radio s'atténue. Ces situations peuvent se créer même aux marges d'une cellule quand le réseau radioéléctrique ne coïncide pas de façon optimale avec celui de la cellule adjacente; ou même à l'intérieur des édifices, des voitures et en d'autres lieux.

Compte tenu de l'indicateur d'intensité de champ, dont tout radiotéléphone de qualité est doté, je peux donc affirmer sans aucun doute que si ce dernier n'indiquait pas la présence d'un signal optimal on ne pourrait jamais être sûr de recevoir un appel.

Dans le même lieu avec un réseau radioéléctrique non optimal, en déplaçant notre téléphone portatif seulement de quelques dizaines de centimètres, il peut se créer différentes situations qui permettent à l'appareil téléphonique mobile de recevoir ou non un appel. Ces situations, malgré nous, ne sont point vérifiables à moins d'effectuer des preuves qui ne sont pas très pratiques et souvent impossibles (par exemple en appelant notre téléphone portatif par un autre appareil).

Ce système innovatif, dont j'ai eu l'idée et s'il vient appliqué en phase de projet à n'importe quel téléphone portatif "cellulaire", permet à l'appareil de signaler à l'usager, au moyen d'un signal acoustique différent et bien distinct de la sonnerie du téléphone même, qu'il est en train de recevoir un appel et qu'il ne pourra avoir de résultat positif tant que le téléphone restera dans la même position.

La plupart des systèmes adoptés dans les téléphones portatifs (par exemple TACS système de téléphonie mobile analogique adopté en Italie) prévoient une deuxième tentative (dans l'éspace de quelques secondes) de la part de la station de base d'envoyer l'appel au mobile, répétant toute la séquence décrite précedemment. A la seconde tentative effectuée par la station de base, si les conditions de mise en pose de l'appareil mobile ne changent pas, l'appel aura peu de chances d'être reçu.

Le système dont j'ai eu l'idée prévoit que l'usager soit averti tout juste à peine la première tentative de la station de base d'envoyer l'appel au mobile ait échoué. L'usager a donc la possibilité, si son téléphone portatif se trouve dans les alentours, de varier la position de l'appareil en s'approchant à une fenêtre; de sortir s'il se trouve dans un lieu fermé; d'extraire l'antenne si elle est rentrée ou de déplacer de peu son radiotéléphone augmentant ainsi la chance d'entendre retentir la sonnerie et sauvant de cette façon un appel qui aurait sûrement été perdu.

En tout cas, même si l'usager ne réussisait pas à effectuer tout de suite ces corrections à son appareil téléphonique mobile, il serait sûrement prêt s'il devait-y-avoir une deuxième tentative de la part de celui qui appelle. Il peut arriver (rarement) que même si l'usager apporte les modifications convenables à la position du téléphone portatif, il ne réussisse pas à établir un contact avec la station de base, toutefois il a toujours l'avantage important, à mon avis, qui lui permet de se conduire selon le mode qu'il retient le plus adapté à la situation.

Maintenant je vais expliquer en détail le fonctionnement technique de mon système en décrivant les caractéristiques que les circuits éléctriques doivent posséder et les points d'applications à l'intérieur de n'importe quel radiotéléphone mobile pour que mon système fonctionne, et en reportant ensuite deux exemples. Les projets des circuits éléctriques doivent être effectués selon les caractéristiques techniques et de projet de départ du radiotéléphone portatif auquel on veut les appliquer.

### Première exemple :

Le circuit éléctrique devrait avoir la possibilité d'être activé et disactivé par deux impulsions logiques distinctes.

Deux ou trois secondes après son déclenchement (le temps nécéssaire au radiotéléphone portatif pour effectuer toutes les opérations de réception et de transmission des données jusqu'à la mise en fonction de la sonnerie), le circuit doit émettre un son acoustique pendant quelques secondes (par l'avertisseur acoustique "buzzer" ou par d'autres moyens) qui advertisse l'usager de l'impossibilité de recevoir un appel.

Le circuit doit être activé au moment où le radiotéléphone reçoit et lit son code d'identification que la station de base lui transmet, essayant de lui envoyer l'appel.

Si l'appel réussit, c'est à dire que le radiotéléphone répond à la station de base, que celle-ci reçoit la réponse et qu'il lui envoie la communication, l'impulsion logique qui successivement activera la sonnerie du radiotéléphone ira désactiver contemporainement le circuit en question, qui, alors, n'émettra aucun son acoustique, on recevra alors un normal appel.

Au cas où le radiotéléphone reçoit son code d'identification (activation du circuit) et transmet sa réponse à la base qui ne sera rejointe, il n'y aura pas de transfert d'appel au mobile, et par conséquent puisque la sonnerie ne s'active pas, il n'y a pas de désactivation du circuit, lequel peut jouer son rôle émettant un signal acoustique.

Dans tout cas, afin d'éviter un mauvais fonctionnement dés que le circuit finit d'émettre le son acoustique il doit se désactiver, se prédisposer à nouveau pour un autre cycle et rester non activable pendant huit ou neuf secondes.

### Deuxième exemple :

Dès que le radiotéléphone reçoit son code d'identification qui a été diffusé par la station de base dans la tentative de lui transmettre la communication, celui-ci répond en éméttant une ou plusieurs très brèves impulsions de radiofréquence. Dans chaque impulsion est contenu le code d'identification du radiotéléphone.

Si le radiotéléphone transmet plus d'une impulsion consécutive, cela signifie qu'il y a des difficultés pour établir une liaison avec la station de base et par conséquent toutes les conditions nécessaires sont en train de se créer pour que l'appel qui doit arriver au radiotéléphone soit manqué.

Si, au contraire, on reçoit une communication qui aura succès, après la première brève impulsion de réponse que le radiotéléphone transmet à la base, il s'établira une liaison et par conséquent le mobile commencera une transmission continue (sur la fréquence établie auparavant) qui restera la même pendant toute la durée de la communication.

Ce circuit doit avoir deux entrées et une sortie et doit opérer en tenant compte des facteurs qui ont été à peine décrits.

A la première entrée doit être connectée l'impulsion logique qui est émise quand le radiotéléphone reçoit le code d'identification qui lui est transmit par la station de base dans la tentative de lui transmettre la communication. Cette impulsion active le circuit qui à ce moment examine ce qui se passe à la deuxième entrée.

A la deuxième entrée doit être connectée la même impulsion logique qui pilote la phase terminale de radiofréquence du téléphone.

Une fois que le circuit est activé à travers la première entrée, à la deuxième entrée arrive dans tous les cas une impulsion de brève durée (moins d'une seconde) qui est la réponse que le téléphone transmet à la station de base.

Cette première impulsion qui arrive à la deuxième entrée doit activer une deuxième section du circuit qui prédispose de nouveau la deuxième entrée pour la reception d'autres impulsions logiques.

Si la deuxième impulsion logique qui arrive à la deuxième entrée du circuit est inférieure à une seconde, elle ira activer une troisième section du circuit (sortie) qui est déjà prédisposée pour émettre un signal acoustique à travers l'avertisseur acoustique "buzzer" pendant quelques secondes et qui avertira ainsi l'usager de l'impossibilité de recevoir la communication qui arrive.

Dés que le circuit finit d'émettre le son acoustique il doit se désactiver, se prédisposer à nouveau pour un autre cycle et rester non activable pendant environ huit ou neuf secondes.

Si, au contraire, la deuxième impulsion logique qui arrive à la deuxième entrée du circuit dure plus d'une seconde, autrement dit continue, elle doit désactiver tout le circuit en question, parce-que cela signifie qu'on va recevoir la communication qui arrive. Du reste, une impulsion logique continue sur la deuxième entrée du circuit doit toujours être en mesure de pouvoir désactiver le circuit même et par conséquent d'interrompre immédiatement le son acoustique dans le cas où il est en train de l'émettre.

Ceci parce-que dans certains cas il arrive que la station de base et le radiotéléphone entrent en contact et donc ils reçoivent l'appel qui arrive même après quelques essais de réponse que le mobile envoie pendant qu'il transmet déjà le signal acoustique.

Recevoir la communication dans ce cas signifie envoyer à la deuxième entrée du circuit une impulsion logique continue; par conséquent le son acoustique est immédiatement interrompu, la sonnerie du radiotéléphone s'active et l'usager peut répondre à la communication sans aucun problème.

Si le circuit, une fois activé à travers la première entrée, ne reçoit aucune impulsion de la part de la deuxième entrée pour un délai de cinq ou six secondes, afin d'éviter un mauvais fonctionnement du système, le circuit doit s'interrompre et se prédisposer de nouveau pour un autre cycle.

L'avantage de ce deuxième circuit est d'avertir l'usager de façon plus rapide et opportune, donc de lui donner plus de possibilités pour sauver la communication.

Si on veut adopter ce système sur les radiotéléphones de conception digitale, il faut apporter la modification après décrit.

Pendant une communication la transmission est continue pour les radiotéléphones analogiques, c'est à dire que le stade terminal de radiofréquence est alimenté de façon continue, alors que pour les radiotéléphones digitaux, pendant la communication, le stade de radiofréquence reste activé par cycles de peu de µs sur quelques ms; il faut donc interposer entre l'impulsion logique qui va piloter le stade de radiofréquence et la deuxième entrée du circuit (en référence au deuxième exemple) un circuit additionnel de compensation où à la sortie duquel le signal logique, qui sera connecté à la deuxième entrée du circuit, résulte linéaire comme dans les radiotéléphones de conception analogique.

Tenant compte que, soit les systèmes analogiques soit les systèmes digitaux ont les mêmes principes de base de fonctionnement, si on apporte au circuit du deuxième exemple la modification décrite plus haut, le système que j'ai inventé est également valable sur les radiotéléphones opérant avec des systèmes digitaux.

Naturellement ces principes de fonctionnement des circuits éléctriques décrit ci-dessus sont à prendre en considération uniquement comme conseils pour la réalisation du système que j'ai inventé, parce-que ce système peut fonctionner même avec un circuit éléctrique qui emploie des systèmes de fonctionnement différents.

Mon invention peut avoir une application industrielle (selon l'Art.57 CBE) vu qu'elle peut être réalisée dans les usines bien équipées qui opèrant dans le secteur éléctronique.

## Revendications

1. Système d'avis d'appel à l'arrivée qui ne peut être reçu par des radiotéléphones portatifs qui opèrent à la réception et à la transmission soit de façon analogique que de façon digitale qui permet au radiotéléphone portatif d'avertir l'usager de l'impossibilité de recevoir l'appel à l'arrive que la station fixe est en train de lui transmettre quand, le radiotéléphone même, bien qu'il recoive le signal radioéléctrique transmis par la station fixe avec laquelle le contact doit s'établir, n'arrive, transmettant ses données par moyen d'ondes éléctromagnétiques, à la réjoindre.

2. Système d'avis d'appel à l'arrivée qui ne peut être reçu par des radiotéléphones portatifs qui, selon la revendication 1 peut être constitué comme partie intégrée indispensable ou non indispensable, ou comme partie additionelle indispensable ou non indispensable d'un quelconque radiotéléphone portatif.

3. Système d'avis d'appel à l'arrivée qui ne peut être reçu par des radiotéléphones portatifs qui, selon la revendication 1 permet à n'importe quel radiotéléphone portatif d'avertir l'usager de l'impossibilité de recevoir l'appel à l'arrivée par moyen d'un son acoustique, un signal visuel, un signal lumineux ou un signal à vibration éléctromécanique.
